# EUROPÄISCHE PATENTSCHRIFT

(11) **EP 3 537 170 B1**
(45) Veröffentlichungstag und Bekanntmachung des Hinweises auf die Patenterteilung: **07.04.2021**
(21) Anmeldenummer: 19159107.2
(22) Anmeldetag: 25.02.2019
(51) Int. Cl.: G01S 5/02, G01S 5/14

(54) **ORTUNGSSYSTEM ZUR POSITIONSBESTIMMUNG IN EINER WARENLOGISTIKEINRICHTUNG SOWIE VERFAHREN ZUM BETREIBEN DESSELBEN**
LOCATION SYSTEM FOR POSITION DETERMINATION IN A GOODS LOGISTICS FACILITY AND METHOD FOR OPERATING THE SAME
SYSTÈME DE LOCALISATION PERMETTANT LA DÉTERMINATION DE LA POSITION DANS UN DISPOSITIF DE LOGISTIQUE DES MARCHANDISES AINSI QUE SON PROCÉDÉ DE FONCTIONNEMENT

(30) Priorität: 05.03.2018 DE 102018104994
(43) Veröffentlichungstag der Anmeldung: 11.09.2019
(73) Patentinhaber: Jungheinrich Aktiengesellschaft, 22047 Hamburg (DE)
(72) Erfinder: Ahrens, Stefan, 25462 Rellingen (DE); Altmann, Tony, 24616 Brokstedt (DE); Grabbe, Florian, 22335 Hamburg (DE); Heise, Sven-Ole, 24783 Osterrönfeld (DE); Kopelke, Jan, 22337 Hamburg (DE)
(74) Vertreter: Seemann & Partner Patentanwälte mbB

(56) Entgegenhaltungen:
- EP-A2- 1 617 601
- WO-A1-2013/006800
- WO-A1-2017/024462
- US-A1- 2008 220 780

## Beschreibung

Die Erfindung betrifft ein Ortungssystem zur Positionsbestimmung in einer Warenlogistikeinrichtung, umfassend eine Mehrzahl von fest installierten Ankerknoten, die Referenzpunkte in einem gemeinsamen Koordinatensystem darstellen. Ferner betrifft die Erfindung ein Verfahren zum Betreiben eines Ortungssystems in einer Warenlogistikeinrichtung, umfassend eine Mehrzahl von fest installierten Ankerknoten, die Referenzpunkte in einem gemeinsamen Koordinatensystem darstellen.

Ortungssysteme zur Positionsbestimmung von mobilen Einheiten, wie beispielsweise WLAN-Transpondern, sind in vielen Bereichen und so auch in der Warenlogistik bekannt. Ein solches System wird auch als engl.: "Indoor Positioning System" bezeichnet. Die zur Positionsbestimmung verwendeten Transponder befinden sich beispielsweise in einem Benutzerendgerät. Ebenso können Transponder an oder in einer Ware, einem Gebinde oder einer Verpackungseinheit vorhanden sein. Auch Flurförderzeuge oder dergleichen können mit entsprechenden Transpondern ausgerüstet sein. Alle diese Einheiten sollen im Kontext der vorliegenden Beschreibung als mobile Einheiten angesehen werden.

Ein solches Ortungssystem ist jedoch nicht auf die Positionsbestimmung innerhalb eines Gebäudes beschränkt, auch wenn dies ein häufiger Anwendungsfall ist. In gleicher Weise kann auch eine Positionsbestimmung beispielsweise in einem Freigelände vorgenommen werden.

Zur Positionsbestimmung wird ein fest installiertes Netz von Referenzpunkten, beispielsweise WLAN-Zugangspunkte oder dergleichen, eingesetzt. Die Positionsbestimmung einer mobilen Einheit erfolgt durch Lateration, also einer Entfernungs- bzw. Abstandsmessung zu drei verschiedenen Punkten, in diesem Fall den Referenzpunkten des Systems. Eine Positionsbestimmung ist auch auf der Grundlage einer Entfernungs- bzw. Abstandsmessung zu zwei Punkten möglich, sofern durch vorhandene Zusatzinformationen einer der beiden Schnittpunkte der Entfernungskreise ausgeschlossen werden kann. Dies ist beispielsweise der Fall, wenn die beiden Referenzpunkte am Rand eines Erfassungsbereichs liegen und somit der zweite außerhalb des Erfassungsbereichs liegende Schnittpunkt ausgeschlossen werden kann. Die Entfernungs- oder Abstandsmessung erfolgt beispielsweise mit Hilfe einer Laufzeitmessung. Die Referenzpunkte sollen als Ankerknoten bezeichnet werden. Ihre als bekannt vorausgesetzten Positionen dienen als Referenzpunkte in einem gemeinsamen Koordinatensystem. Die Ankerknoten werden also in einem gemeinsamen Koordinatensystem dargestellt bzw. referenziert. Damit die als Referenzpunkte verwendeten Ankerknoten auch als Fixpunkte für die Bestimmung eines absoluten Ortes in dem gemeinsamen Koordinatensystem dienen können, müssen bei der Einrichtung des Ortungssystems die Positionen der Ankerknoten bestimmt werden. Dieser Vorgang findet vielfach von Hand statt und ist daher zeitaufwendig und fehleranfällig.

Aus WO 2013/006800 A1 ist ein drahtloses Kommunikationsnetzwerk bekannt, bei dem die Position eines Gerätes, dessen Position bisher unbekannt ist, bestimmt wird. Hierzu werden die Signale zwischen Referenzgeräten und dem Gerät, dessen Position bestimmt werden soll, ausgewertet.

Aus WO 2017/024462 A1 ist ein Netzwerk bekannt, welches verschiedene Ankerknoten umfasst, die beispielsweise in einem Gebäude angeordnet sind. Diese Ankerknoten können mit einem mobilen Gerät kommunizieren, um dessen Position zu verfolgen oder zu bestimmen. Es wird der Abstand zwischen den einzelnen Ankerknoten bestimmt, indem jeder der Anker mit einem entsprechenden Abstandsmesssystem ausgerüstet wird.

Es ist eine Aufgabe der vorliegenden Erfindung, ein Ortungssystem zur Positionsbestimmung in einer Warenlogistikeinrichtung sowie ein Verfahren zum Betreiben eines solchen Ortungssystems anzugeben, wobei das Ortungssystem im Hinblick auf die Position der Ankerknoten weniger fehleranfällig ist.

Die Aufgabe wird gelöst durch ein Ortungssystem zur Positionsbestimmung in einer Warenlogistikeinrichtung, umfassend eine Mehrzahl von fest installierten Ankerknoten, die Referenzpunkte in einem gemeinsamen Koordinatensystem darstellen, wobei das Ortungssystem dazu eingerichtet ist, ausgehend von einem ersten Ankerknoten einen Abstand zu zumindest einem zweiten Ankerknoten zu bestimmen, und wobei den fest installierten Ankerknoten jeweils eine Position in dem Koordinatensystem zugewiesen ist und das Ortungssystem dazu eingerichtet ist, eine Abstandsmessung zwischen einem ersten Ankerknoten und einem zweiten Ankerknoten vorzunehmen und den gemessenen Abstandswert mit einem errechneten Abstandswert zu vergleichen, wobei der errechnete Abstandswert aus der zugewiesenen Position des ersten Ankerknotens und der zugewiesenen Position des zweiten Ankerknotens in dem Koordinatensystem berechnet ist, und eine Abweichung zwischen dem gemessenen Abstandswert und dem errechneten Abstandswert als Plausibilitätskriterium festzulegen, und sofern die Abweichung einen vorgegebenen Grenzwert überschreitet, die zugewiesene Position des ersten und/oder des zweiten Ankerknotens als nicht plausibel zu klassifizieren.

Die Abstandsmessung zwischen dem ersten und dem zweiten Ankerknoten kann mehrfach durchgeführt werden, sie kann also wiederholt werden. Bei Durchführung wiederholter Abstandsmessungen kann ein Mittelwert gebildet werden, wodurch der gemessene Wert des Abstands genauer wird.

Das Ortungssystem ist insbesondere ein Ortungssystem zur Positionsbestimmung zumindest einer mobilen Einheit in der Warenlogistikeinrichtung. Das Ortungssystem ist ferner insbesondere dazu eingerichtet, eine Position der mobilen Einheit in dem Koordinatensystem durch Abstandsmessungen zu mehreren Ankerknoten zu bestimmen.

Es ist ferner insbesondere vorgesehen, dass mehrere Abstandsmessungen durchgeführt werden, wobei ausgehend von dem ersten Ankerknoten jeweils ein Abstand zu einer Mehrzahl zweiter Ankerknoten bestimmt wird.

Zur Bestimmung einer Position der mobilen Einheit im Koordinatensystem wird deren Abstand zu verschiedenen Ankerknoten gemessen. Die Positionsermittlung erfolgt beispielsweise mittels Lateration bzw. Trilateration. Bei der Lateration wird ein Schnittpunkt mehrerer Entfernungskreise bestimmt, bei der Trilateration sind es drei Entfernungskreise.

Genau genommen handelt es sich bei den Entfernungskreisen um Kugeln. Als zusätzliche Annahme kann jedoch vorausgesetzt werden, dass sich die Ankerknoten alle zumindest in etwa in der gleichen Höhe befinden und sich die mobile Einheit, wie beispielsweise ein Flurförderzeug, lediglich in einer Ebene bewegt. Aufgrund dieser Umstände lässt sich das prinzipiell dreidimensionale Problem der Positionsbestimmung in eine Ebene abbilden und es kann der Schnittpunkt der Entfernungskreise in dieser Ebene betrachtet werden.

Die mobile Einheit ist beispielsweise ein Flurförderzeug. Es ist jedoch ebenso vorgesehen, dass die mobile Einheit ein Benutzerendgerät ist, beispielsweise ein Smartphone, welches mit einer entsprechenden Software (App) ausgestattet ist. Ferner kann die mobile Einheit beispielsweise eine Wareneinheit sein, die mit einem Transponder oder dergleichen versehen ist.

Zur Abstandsbestimmung bzw. Positionsbestimmung kommen als Ankerknoten beispielsweise WLAN-Transponder oder Basisstationen zum Einsatz. Entsprechend umfasst die mobile Einheit ebenfalls einen WLAN-Transponder. Es ist ebenso möglich, das Ortungssystem auf der Grundlage einer anderen an sich bekannten Technologie aufzubauen, wie sie typischerweise für sog. "Indoor Positioning Systeme" zum Einsatz kommt.

Ferner ist insbesondere vorgesehen, dass das Ortungssystem auf der Grundlage von Ultra-Breitband-Technologie (UWB-Technologie) realisiert wird. Dementsprechend kommen zur Abstandsbestimmung bzw. Positionsbestimmung als Ankerknoten UWB-Transponder oder Basisstationen zum Einsatz und die mobile Einheit umfasst ebenfalls einen UWB-Transponder.

Vorteilhaft ist es mit dem Ortungssystem gemäß Aspekten der Erfindung möglich, die Position von Ankerknoten und somit das Referenzsystem zu überprüfen. Die Zuverlässigkeit und Genauigkeit des Ortungssystems wird verbessert, es kann eine gleichbleibend hohe Ortungsqualität sichergestellt werden.

Fehler beim Einmessen einer Position eines Ankerknotens haben direkten Einfluss auf die Positionsbestimmung und somit auf die Ortungsqualität. Es ist möglich, dass beim manuellen Einmessen der Ankerknoten versehentlich falsche Positionen zugeordnet werden, was die Positionsbestimmung/Ortung massiv stören kann. Solche Fehler können in dem Ortungssystem gemäß Aspekten der Erfindung effizient und schnell aufgefunden werden.

Ferner können ungewollte Änderungen der Position der Ankerknoten auftreten, beispielsweise durch eine Kollision. Auch solche Ankerknoten können aufgefunden werden, so dass eine gleichbleibend hohe Ortungsqualität sichergestellt werden kann. Schließlich ist es möglich festzustellen, ob ein Ankerknoten ausgefallen ist.

Alle diese bei herkömmlichen Systemen vorhandenen technischen Nachteile sind bei dem Ortungssystem gemäß Aspekten der Erfindung beseitigt worden.

Gemäß einer Ausführungsform ist das Ortungssystem dadurch fortgebildet, dass den fest installierten Ankerknoten jeweils eine Position in dem Koordinatensystem zugewiesen ist und das Ortungssystem dazu eingerichtet ist, eine Abstandsmessung zwischen einem ersten Ankerknoten und einem zweiten Ankerknoten vorzunehmen und den gemessenen Abstandswert mit einem errechneten Abstandswert zu vergleichen, wobei der errechnete Abstandswert aus der zugewiesenen Position des ersten Ankerknotens und der zugewiesenen Position des zweiten Ankerknotens in dem Koordinatensystem berechnet sind, und eine Abweichung zwischen dem gemessenen Abstandswert und dem errechneten Abstandswert als Plausibilitätskriterium festzulegen, und sofern die Abweichung einen vorgegebenen Grenzwert überschreitet, die zugewiesene Position des ersten und/oder des zweiten Ankerknotens als nicht plausibel zu klassifizieren.

Zur Durchführung der erforderlichen Berechnungen und vor allem der Abstandsmessung, verfügt das Ortungssystem über eine geeignete Zentraleinheit, beispielsweise einen Rechner oder eine Workstation. Die erforderlichen Berechnungen können auch dezentral, beispielsweise in den Ankerknoten oder auch in der mobilen Einheit, vorgenommen werden.

Es ist ferner insbesondere vorgesehen, dass für Ankerknoten, deren Position als nicht plausibel klassifiziert wird, eine Wartungsmitteilung innerhalb des Ortungssystems generiert wird. So ist es möglich, die Position des fraglichen Ankerknotens gezielt zu überprüfen und gegebenenfalls zu korrigieren. Eine solche äußerst zielgerichtete Wartung des Ortungssystems spart Zeit und Kosten.

Das Ortungssystem ist insbesondere dadurch fortgebildet, dass das Ortungssystem ferner dazu eingerichtet ist, für eine Anzahl vorbestimmter Ankerknoten jeweils Abstandsmessungen zu den benachbarten Ankerknoten durchzuführen und die Positionen eines Ankerknotens als nicht plausibel zu klassifizieren, wenn der gemessene Abstandswert vom errechneten Abstandswert um mehr als den vorgegebenen Grenzwert abweicht und eine solche Abweichung für mehr als einen benachbarten Ankerknoten vorliegt.

Die vorbestimmten Ankerknoten sind beispielsweise Ankerknoten in einem ausgewählten Bereich oder einem bestimmten Abschnitt des Ortungssystems. Beispielsweise kann eine Halle oder eine bestimmte Freifläche einer Warenlogistikeinrichtung zur Überprüfung vorgesehen sein. Die Anzahl vorbestimmter Ankerknoten kann eins betragen, es kann sich um eine Teilmenge der im Ortungssystem insgesamt vorhandenen Ankerknoten handeln oder die Anzahl ist identisch zur Anzahl der insgesamt vorhandenen Ankerknoten. Im letzten Fall werden alle Ankerknoten des Systems überprüft.

Wenn eine Abweichung für mehrere benachbarte Ankerknoten vorliegt, so lässt sich mit großer Wahrscheinlichkeit darauf schließen, dass derjenige Ankerknoten, welcher jeweils abweichende Abstandswerte zu seinem nächsten Nachbarn aufweist, mit einer nicht korrekten Positionsinformation versehen ist. So lassen sich beispielsweise fehlerhaft eingemessene Ankerknoten, versehentlich verschobene Ankerknoten oder auch defekte Ankerknoten schnell und zuverlässig identifizieren.

Das Ortungssystem ist ferner insbesondere dadurch fortgebildet, dass verifizierte Ankerknoten, deren Positionen als plausibel klassifiziert sind, und zumindest ein hinzugefügter Ankerknoten umfasst sind, wobei das Ortungssystem ferner dazu eingerichtet ist, für den zumindest einen hinzugefügten Ankerknoten Abstandsmessungen zu den benachbarten verifizierten Ankerknoten durchzuführen und eine dem hinzugefügten Ankerknoten zugewiesene Position als nicht plausibel zu klassifizieren, wenn der gemessene Abstandswert vom errechneten Abstandswert und mehr als dem vorgegebenen Grenzwert abweicht.

Als plausibel wird eine Position dann angesehen, wenn die Abweichung zwischen dem errechneten Wert und dem gemessenen Wert für alle Nachbarn unterhalb des vorgebbaren Grenzwerts liegt. Die Überprüfung eines hinzugefügten Ankerknotens ist besonders vorteilhaft, da die Positionszuordnung vielfach manuell durchgeführt wird und entsprechend fehleranfällig ist.

Gemäß einer weiteren Ausführungsform ist vorgesehen, dass das Ortungssystem ferner dazu eingerichtet ist, die zumindest eine Abstandsmessung auf Anforderung oder in vorgebbaren regelmäßigen zeitlichen Intervallen durchzuführen.

Die Überprüfung des Referenzsystems in regelmäßigen Abständen oder die Überprüfung des Referenzsystems des Ortungssystems auf Anforderung erlaubt es, einfach, schnell und zuverlässig die Qualität des Referenzsystems auf einem hohen Niveau zu halten. Die Qualität der Ortung kann insgesamt verbessert werden, wenn regelmäßig automatische Überprüfungen des Referenzsystems möglich sind und durchgeführt werden. Es ist im Rahmen einer solchen Qualitätskontrolle ebenfalls möglich, ausgefallene Ankerknoten zu identifizieren.

Die benachbarten Ankerknoten sind beispielsweise die in einem Empfangs- oder Sendeempfangsbereich des ersten Ankerknotens liegenden weiteren Ankerknoten des Systems. Je nach Anordnung kann auch eine geringere Anzahl von Ankerknoten als nächste Nachbarn festgelegt werden. Bei Anordnung der Ankerknoten in einem regelmäßigen quadratischen Gitter können dies beispielsweise die vier nächsten Nachbarn sein.

Es ist ebenfalls bevorzugt vorgesehen, dass die Ankerknoten des Ortungssystems, zwischen denen ein Abstand bestimmt wird, in direktem Sichtkontakt miteinander stehen. Mit anderen Worten ist in einer direkten Verbindungslinie zwischen den Ankerknoten kein Hindernis vorhanden. So kann das Auftreten von fehlerhaften Messungen, beispielsweise durch Reflektionen, vermieden oder verringert werden.

Gemäß einer weiteren Ausführungsform ist vorgesehen, dass in einem Fall, in dem die Ankerknoten des Ortungssystems, zwischen denen ein Abstand bestimmt wird, nicht in direktem Sichtkontakt miteinander stehen, vorbestimmte Dämpfungskonstanten bei der Bestimmung des Abstands berücksichtigt werden. Solche Dämpfungskonstanten sind für alle gängigen Funktechnologien und Materialien bekannt, so dass beispielsweise auch der Abstand zu einem Ankerknoten, der auf der gegenüberliegenden Seite einer Mauer liegt, genau bestimmt werden kann.

Das Ortungssystem ist ferner insbesondere dadurch fortgebildet, dass die Mehrzahl von Ankerknoten eine erste und eine zweite Gruppe von Ankernoten umfasst, wobei der ersten Gruppe von Ankerknoten jeweils eine Position zugewiesen ist und der zweiten Gruppe von Ankerknoten jeweils keine Position zugewiesen ist, wobei das Ortungssystem ferner dazu eingerichtet ist, Abstände zwischen einem ersten Ankerknoten der zweiten Gruppe und zumindest drei unterschiedlichen zweiten Ankerknoten der ersten Gruppe zu bestimmen, ausgehend von diesen Abständen eine Position des ersten Ankerknotens zu berechnen und dem ersten Ankerknoten die errechnete Position zuzuweisen.

Die erste Gruppe von Ankerknoten ist insbesondere eine Teilmenge der Mehrzahl von Ankerknoten. Die zweite Gruppe von Ankerknoten ist eine Teilmenge der Mehrzahl von Ankerknoten. Die erste und die zweite Gruppe sind zwei sich nicht überlappende Mengen.

Ein Ortungssystem gemäß dem oben genannten Ausführungsbeispiel erlaubt einen automatischen und selbstständigen Auf- und Ausbau des Referenzsystems. Vorteilhaft müssen die hinzugefügten Ankerknoten nicht von Hand ausgemessen werden. Das manuelle Einmessen einer großen Anzahl von Ankerknoten ist aufwendig und kostenintensiv. Die Positionen der hinzugefügten Ankerknoten werden ausgehend von einer minimalen Anzahl anfänglicher Ankerknoten, deren Positionen bekannt sind, automatisch bestimmt. Der Aufbau des Referenzsystems erfolgt auf diese Weise sehr schnell und ist weniger fehleranfällig als ein manuelles Ausmessen der hinzugefügten Ankerknoten.

Die Aufgabe wird ferner gelöst durch ein Verfahren zum Betreiben eines Ortungssystems in einer Warenlogistikeinrichtung, umfassend eine Mehrzahl von fest installierten Ankerknoten, die Referenzpunkte in einem gemeinsamen Koordinatensystem darstellen, wobei ausgehend von einem ersten Ankerknoten ein Abstand zu zumindest einem zweiten Ankerknoten bestimmt wird, wobei das Verfahren dadurch fortgebildet ist, dass den fest installierten Ankerknoten jeweils eine Position in dem Koordinatensystem zugewiesen ist oder wird und das Verfahren die folgenden Schritte umfasst: Messen eines Abstands zwischen einem ersten Ankerknoten und einem zweiten Ankerknoten, Errechnen eines Abstandswerts aus der zugewiesenen Position des ersten Ankerknotens und der zugewiesenen Position des zweiten Ankerknotens in dem Koordinatensystem, Vergleichen des gemessenen Abstandswerts mit dem errechneten Abstandswert und Klassifizieren der zugewiesenen Position des ersten und/oder des zweiten Ankerknotens als nicht plausibel, wenn eine Abweichung zwischen dem gemessenen Abstandswert und dem errechneten Abstandswert größer als ein vorgegebener Grenzwert ist.

Auf das Verfahren treffen gleiche oder ähnliche Vorteile zu, wie sie bereits im Hinblick auf das Ortungssystem selbst erwähnt wurden, so dass auf Wiederholungen verzichtet werden soll.

Das Verfahren ist insbesondere ein Verfahren zum Betreiben eines Ortungssystems zur Positionsbestimmung zumindest einer mobilen Einheit. Ferner wird im Rahmen des Verfahrens insbesondere eine Position der mobilen Einheit in dem Koordinatensystem durch Abstandsmessungen zu mehreren Ankerknoten bestimmt.

Dieses Verfahren ist vorteilhaft dadurch fortgebildet, dass für eine Anzahl vorbestimmter Ankerknoten jeweils ein Abstand zu den benachbarten Ankerknoten gemessen und die Positionen eines Ankerknotens als nicht plausibel klassifiziert werden, wenn der gemessene Abstandswert vom errechneten Abstandswert und mehr als dem vorgegebenen Grenzwert abweicht und eine solche Abweichung für mehr als einen benachbarten Ankerknoten vorliegt.

Gemäß einer weiteren vorteilhaften Ausführungsform ist das Verfahren dadurch fortgebildet, dass verifizierte Ankerknoten, deren Positionen als plausibel klassifiziert sind, und zumindest ein hinzugefügter Ankerknoten in dem Ortungssystem umfasst sind, wobei der Abstand zumindest eines hinzugefügten Ankerknotens zu benachbarten verifizierten Ankerknoten gemessen wird und eine dem hinzugefügten Ankerknoten zugewiesene Position als nicht plausibel klassifiziert wird, wenn der gemessene Abstandswert vom errechneten Abstandswert und mehr als dem vorgegebenen Grenzwert abweicht.

Ferner ist insbesondere vorgesehen, dass die zumindest eine Abstandsmessung auf Anforderung oder in vorgebbaren regelmäßigen zeitlichen Intervallen durchgeführt wird.

Auch auf die genannten Ausführungsformen treffen gleiche oder ähnliche Vorteile zu, wie sie bereits im Hinblick auf die entsprechenden Ausführungsformen des Ortungssystems erwähnt wurden.

Ferner ist das Verfahren insbesondere dadurch fortgebildet, dass die Mehrzahl von Ankerknoten eine erste und eine zweite Gruppe von Ankernoten umfasst, wobei der ersten Gruppe von Ankerknoten jeweils eine Position zugewiesen wird oder ist und der zweiten Gruppe von Ankerknoten jeweils keine Position zugewiesen wird oder ist, wobei das Verfahren die folgenden Schritte umfasst: Bestimmen von Abständen zwischen einem ersten Ankerknoten der zweiten Gruppe und zumindest drei unterschiedlichen zweiten Ankerknoten der ersten Gruppe, Errechnen einer Position des ersten Ankerknotens ausgehend von diesen Abständen und Zuweisen der errechneten Position zu dem Ankerknoten.

Das Verfahren gemäß dieser Ausführungsform erlaubt vorteilhaft den automatischen Aufbau eines Referenzsystems eines Ortungssystems.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 und 2: jeweils eine schematisch vereinfachte Darstellung eines Ortungssystems, in dem eine Abstandsmessung zwischen Ankerknoten zur Ermittlung einer Position eines Ankerknotens, dem bisher noch keine Position zugewiesen wurde, vorgenommen wird und
- Fig. 3: eine schematisch vereinfachte Darstellung einer Überprüfung von bereits zugewiesenen Positionen von Ankerknoten in einem Ortungssystem.

In den Zeichnungen sind jeweils gleiche oder gleichartige Elemente und/oder Teile mit denselben Bezugsziffern versehen, so dass von einer erneuten Vorstellung jeweils abgesehen wird.

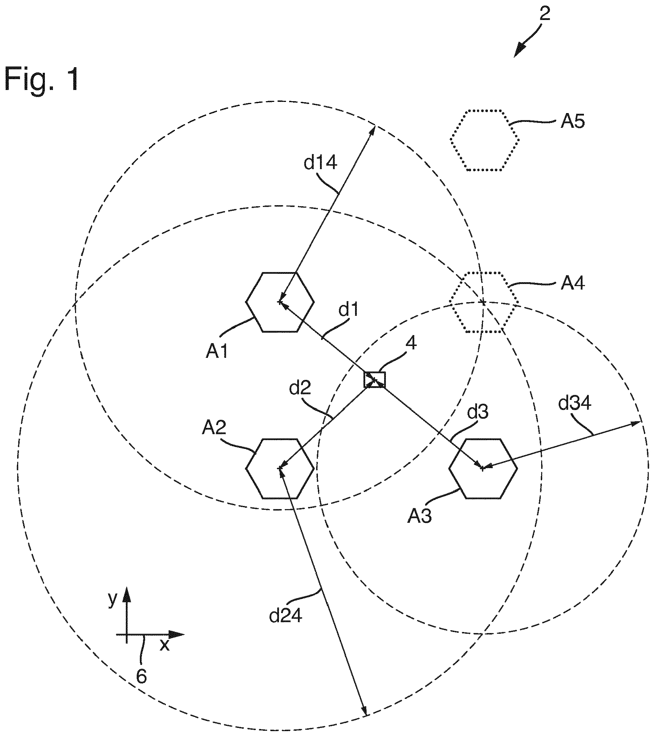

Fig. 1 zeigt eine schematisch vereinfachte Darstellung eines Ortungssystems 2 zur Positionsbestimmung einer mobilen Einheit 4 in einer Warenlogistikeinrichtung. Die mobile Einheit 4 kann ein Benutzerendgerät sein, beispielsweise ein Smartphone, welches mit einer entsprechenden Software (App) ausgestattet ist. Ebenso kann die mobile Einheit 4 ein Flurförderzeug sein, welches mit einem Transponder oder dergleichen versehen ist. Das Ortungssystem 2 umfasst eine Mehrzahl von fest installierten Ankerknoten A1..A5. Die Ankerknoten A1..A5 bilden Referenzpunkte in einem gemeinsamen Koordinatensystem 6, d.h. die Positionen der Ankerknoten A1..A5 sind als Koordinaten in diesem einen gemeinsamen Koordinatensystem 6 dargestellt. Das Ortungssystem 2 ist dazu eingerichtet, eine Position der mobilen Einheit 4 in dem Koordinatensystem 6 zu bestimmen. Hierzu werden die Abstände zwischen der mobilen Einheit 4 und mehreren Ankerknoten A1..A5 gemessen.

Arbeitet das Ortungssystem 2 in einer Ebene, was in der Regel der Fall ist, und sind die Ankerknoten A1..A5 alle in etwa in der gleichen Höhe angebracht, so ist die Abstandsmessung zu drei Ankerknoten A1..A3 ausreichend, um die Position der mobilen Einheit 4 feststellen zu können.

Beispielhaft ist in Fig. 1 ein Ortungssystem 2 dargestellt, in dem die Position der mobilen Einheit 4 durch eine Abstandsmessung zu den Ankerknoten A1..A3 bestimmt wird. Es werden die Entfernungen d1, d2 und d3 gemessen. Die Entfernungsmessungen erfolgen beispielsweise über eine Laufzeitmessung. Ein solches Verfahren ist allgemein als Lateration oder Trilateration bekannt.

Das Ortungssystem 2 ist ferner dazu eingerichtet, einen Abstand zwischen den Ankerknoten A1..A5, beispielsweise einen Abstand zwischen zwei Ankerknoten zu bestimmen. Beispielsweise kann der Abstand zwischen dem ersten Ankerknoten A1 und dem vierten Ankerknoten A4 bestimmt werden. Der Abstand zwischen dem ersten und dem vierten Ankerknoten A1, A4 ist als Entfernungskreis mit dem Durchmesser d14 in Fig. 1 aufgetragen. In gleicher Weise kann auch der Abstand zwischen dem zweiten Ankerknoten A2 und dem vierten Ankerknoten A4 bestimmt werden. Der entsprechende Entfernungskreis mit dem Durchmesser d24 ist ebenfalls dargestellt. In einer Ebene lässt sich die Position des vierten Ankerknotens A4 aus den beiden Werten der Abstände d14 und d24 nun noch nicht eindeutig bestimmen, da die beiden Kreise zwei Schnittpunkte aufweisen. Aus diesem Grund wird ein weiterer Ankerknoten hinzugenommen und es wird die Entfernung zwischen dem dritten Ankerknoten A3 und dem vierten Ankerknoten A4 gemessen. Es ergibt sich ein Entfernungskreis mit dem Durchmesser d34. Anhand der Schnittpunkte der drei Entfernungskreise lässt sich die Position des vierten Ankerknotens A4 eindeutig bestimmen. So ist es möglich, ausgehend von den als bekannt angenommenen Positionen der drei Ankerknoten A1, A2 und A3, auf eine Position eines weiteren Ankerknotens, in diesem Fall des vierten Ankerknotens A4, zu schließen. Diese Information kann zu verschiedenen Zwecken herangezogen werden.

Beispielsweise ist die Mehrzahl der Ankerknoten A1..A5 des Ortungssystems 2 in eine erste Gruppe von Ankerknoten und in eine zweite Gruppe von Ankerknoten aufgeteilt. Die erste Gruppe bilden im dargestellten Ausführungsbeispiel die drei Ankerknoten A1, A2 und A3. Diesen Ankerknoten A1, A2, A3 ist jeweils eine Position zugewiesen, weshalb sie in durchgezogener Linie gezeichnet sind. Beispielsweise ist den drei Ankerknoten A1, A2 und A3 durch manuelles Einmessen eine Position in dem gemeinsamen Koordinatensystem 6 zugewiesen worden. Die zweite Gruppe von Ankerknoten umfasst die beiden Ankerknoten A4 und A5, denen noch keine Position zugewiesen wurde. Das Ortungssystem 2 ist dazu eingerichtet, den Abstand zwischen den drei Ankerknoten A1, A2 und A3 der ersten Gruppe und dem Ankerknoten A4 der zweiten Gruppe zu bestimmen. Dies sind die Abstände d14, d24 und d34. Ausgehend von diesen Abständen d14, d24, d34 kann die Position des vierten Ankerknotens A4 berechnet werden. In einem nachfolgenden Schritt wird dem Ankerknoten A4 die errechnete Position zugewiesen.

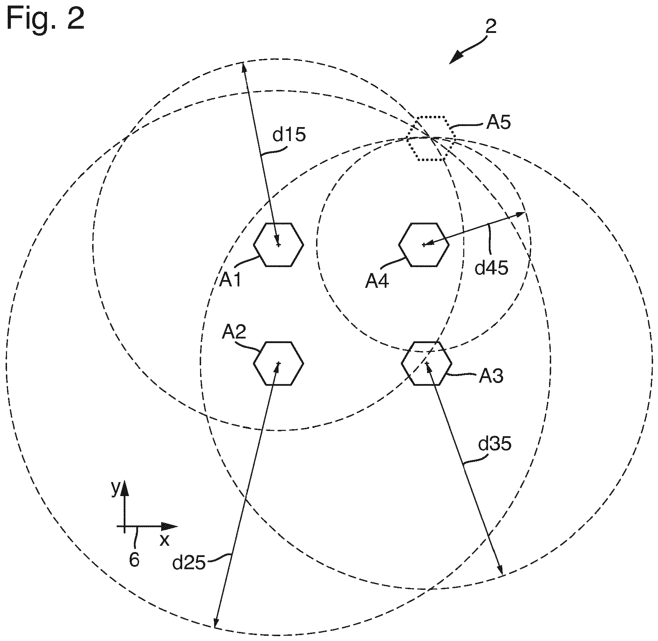

Den weiteren Ausbau des Systems illustriert Fig. 2. In dem dort dargestellten Ortungssystem 2 sind den vier Ankerknoten A1 bis A4 jeweils bereits feste Positionen in dem gemeinsamen Koordinatensystem 6 zugewiesen worden. Die dem vierten Ankerknoten A4 zugewiesene Position ist beispielsweise die zuvor berechnete. Nun bilden die vier Ankerknoten A1..A4 die erste Gruppe von Ankerknoten, denen bereits eine Position zugewiesen wurde. Die zweite Gruppe umfasst im dargestellten Beispiel lediglich den fünften Ankerknoten A5. Es werden nun die Abstände zwischen den vier Ankerknoten A1..A4 der ersten Gruppe, nämlich die Abstände d15, d25, d35 und d45, und dem fünften Ankerknoten A5 bestimmt. In diesem Fall ist die Position des fünften Ankerknotens A5 im gemeinsamen Koordinatensystem 6 überbestimmt, was jedoch eine größere Genauigkeit ermöglicht. Ausgehend von den Werten der Abstände d15, d25, d35 und d45 und der Kenntnis der Positionen der vier Ankerknoten A1..A4 im gemeinsamen Koordinatensystem 6 kann auf die Position des fünften Ankerknotens A5 im gemeinsamen Koordinatensystem 6 geschlossen werden. Die errechnete Position wird anschließend dem Ankerknoten A5 zugewiesen.

So wie oben im Zusammenhang mit den Figuren 1 und 2 erläutert, kann ein automatischer Ausbau eines Referenzsystems des Ortungssystems 2 erfolgen, wobei sukzessive Ankerknoten errechnete Positionen im gemeinsamen Koordinatensystem 6 zugewiesen werden.

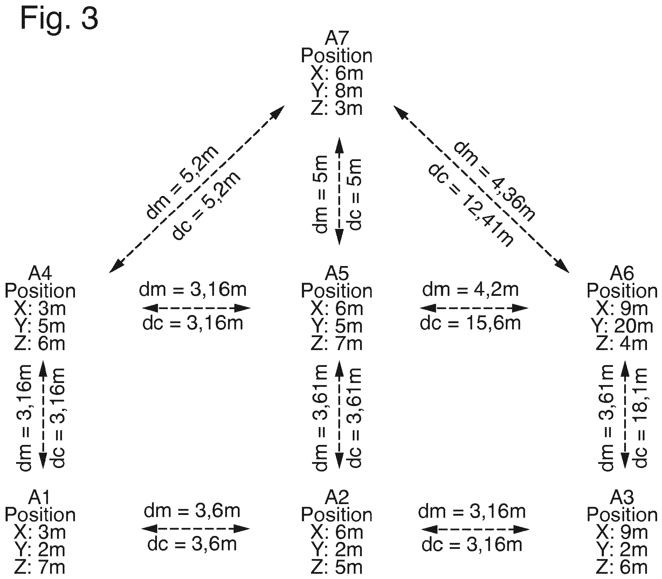

Es ist ferner vorgesehen, dass das Ortungssystem 2 fest installierte Ankerknoten A1 bis A7 umfasst, denen jeweils bereits eine Position in dem gemeinsamen Koordinatensystem 6 zugewiesen ist. Diese Situation illustriert die schematische Darstellung in Fig. 3.

Die Positionen der Ankerknoten A1..A7 sind jeweils als X-, Y- und Z-Koordinaten in dem gemeinsamen Koordinatensystem 6 angegeben. Das Ortungssystem 2 ist dazu eingerichtet, eine Abstandsmessung zwischen einem ersten Ankerknoten, beispielsweise dem Ankerknoten A4, und einem zweiten Ankerknoten, beispielsweise dem Ankerknoten A7, vorzunehmen. Der gemessene Abstand ist mit dm bezeichnet und beträgt beispielhaft 5,2 Meter. Dieser Abstandswert wird mit einem errechneten Abstandswert dc verglichen, welcher aus den bekannten Koordinaten der beiden Ankerknoten A4, A7 in dem gemeinsamen Koordinatensystem 6 berechnet ist. Im dargestellten Ausführungsbeispiel beträgt der berechnete Abstandswert dc ebenfalls 5,2 Meter. Beträgt die Abweichung zwischen dem gemessenen Abstandswert dm und dem errechneten Abstandswert dc weniger als ein vorgegebener Grenzwert oder stimmt, wie im dargestellten Ausführungsbeispiel, bis auf die dargestellte Messgenauigkeit überein, so wird kein Fehler der zugewiesenen Positionen des ersten Ankerknotens A4 oder des zweiten Ankerknotens A7 angenommen.

Anders verhält sich die Situation, wenn als erster Ankerknoten der Ankerknoten A6 angenommen wird. Sein gemessener Abstand zu einem zweiten Ankerknoten, beispielsweise dem Ankerknoten A5, beträgt dm = 4,2 Meter. Der berechnete Abstand zwischen den beiden Ankerknoten A6, A5 beträgt jedoch 15,6 Meter. Die Abweichung zwischen dem gemessenen Wert dm und dem berechneten Wert dc beträgt mehr als ein beispielhaft angenommener Grenzwert von 0,1 Meter. Aus diesem Grund kann die zugewiesene Position des ersten Ankerknotens A6 oder die zugewiesene Position des zweiten Ankerknotens A5 oder auch die jeweiligen Positionen beider Ankerknoten als nicht plausibel klassifiziert werden.

Um festzustellen, welcher der beiden Ankerknoten mit einer nicht plausiblen Positionsinformation versehen ist, werden weitere Abstandmessungen durchgeführt. Anhand eines Vergleichs der gemessenen Werte dm und der berechneten Werte dc zwischen dem Ankerknoten A6 und den Ankerknoten A3 und A7 lässt sich feststellen, dass der Ankerknoten A6 auch zu diesen benachbarten Ankerknoten erhebliche Abweichungen zwischen dem gemessenen Wert dm und dem berechneten Wert dc zeigt. Da die jeweils benachbarten Ankerknoten A3, A5 und A7 zu ihren jeweiligen Nachbarn jedoch keine signifikanten Abweichungen zwischen den gemessenen Werten dm und den berechneten Werten dc zeigen, ist es sehr wahrscheinlich, das dem Ankerknoten A6 eine falsche Position zugewiesen wurde. Aus diesem Grund wird die Position des Ankerknotens A6 als nicht plausibel klassifiziert.

Es ist möglich, dass in dem Ortungssystem 2 in Reaktion auf ein solches Ereignis eine Warnmitteilung oder eine Wartungsmitteilung generiert und ausgegeben wird. Beispielsweise kann die gezielte Wartungsmitteilung ausgegeben werden, die Positionszuweisung des Ankerknotens A6 zu überprüfen. Dies kann durch erneutes manuelles Einmessen des spezifischen Ankerknotens erfolgen. Es ist jedoch ebenso möglich, dass die Position des Ankerknotens A6, so wie es im Zusammenhang mit den Figuren 1 und 2 erläutert wurde, automatisch aus den Abständen zu den übrigen Ankerknoten A1, A2, A3, A4, A5 und A7 berechnet wird. Dieser neu berechnete Wert kann dem Ankerknoten A6 anschließend zugewiesen werden.

Die zuvor beschriebene Überprüfung und Korrektur der Positionen der Ankerknoten kann in regelmäßigen Abständen erfolgen oder durch eine Benutzereingabe veranlasst sein. So ist es möglich, eine hohe Qualität des Referenzsystems des Ortungssystems 2 aufrechtzuerhalten. Ebenso ist es möglich, eine Überprüfung für hinzugefügte Ankerknoten durchzuführen, um die den hinzugefügten Ankerknoten manuell zugewiesenen Positionen zu überprüfen und zu verifizieren.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Ortungssystem
- 4: mobile Einheit
- 6: Koordinatensystem
- A1..A7: Ankerknoten
- d1..d3: Entfernungen
- d14, d24, d34: Abstände
- d15, d25, d35, d45: Abstände
- dm: gemessener Abstand
- dc: berechneter Abstand

## Patentansprüche

1. Ortungssystem (2) zur Positionsbestimmung in einer Warenlogistikeinrichtung, umfassend eine Mehrzahl von fest installierten Ankerknoten (A1..A5), die Referenzpunkte in einem gemeinsamen Koordinatensystem (6) darstellen, wobei das Ortungssystem (2) dazu eingerichtet ist, ausgehend von einem ersten Ankerknoten (A1) einen Abstand (d14) zu zumindest einem zweiten Ankerknoten (A4) zu bestimmen, wobei
den fest installierten Ankerknoten (A1..A7) jeweils eine Position in dem Koordinatensystem (6) zugewiesen ist und das Ortungssystem (2) dazu eingerichtet ist, eine Abstandsmessung zwischen einem ersten Ankerknoten (A6) und einem zweiten Ankerknoten (A3) vorzunehmen und den gemessenen Abstandswert (dm) mit einem errechneten Abstandswert (dc) zu vergleichen, wobei der errechnete Abstandswert (dc) aus der zugewiesenen Position des ersten Ankerknotens (A6) und der zugewiesenen Position des zweiten Ankerknotens (A3) in dem Koordinatensystem (6) berechnet ist, **dadurch gekennzeichnet, dass** eine Abweichung zwischen dem gemessenen Abstandswert (dm) und dem errechneten Abstandswert (dc) als Plausibilitätskriterium festgelegt wird, und sofern die Abweichung einen vorgegebenen Grenzwert überschreitet, die zugewiesene Position des ersten und/oder des zweiten Ankerknotens (A6, A3) als nicht plausibel klassifiziert wird.

2. Ortungssystem (2) nach Anspruch 1, **dadurch gekennzeichnet, dass** das Ortungssystem (2) ferner dazu eingerichtet ist, für eine Anzahl vorbestimmter Ankerknoten (A1..A7) jeweils Abstandsmessungen zu den benachbarten Ankerknoten (A1..A7) durchzuführen und die Position eines Ankerknotens (A6) als nicht plausibel zu klassifizieren, wenn der gemessene Abstandswert (dm) vom errechneten Abstandswert (dc) um mehr als den vorgegebenen Grenzwert abweicht und eine solche Abweichung für mehr als einen benachbarten Ankerknoten (A1..A7) vorliegt.

3. Ortungssystem (2) nach Anspruch 1 oder 2, **dadurch gekennzeichnet, dass** verifizierte Ankerknoten (A1..A3), deren Positionen als plausibel klassifiziert sind, und zumindest ein hinzugefügter Ankerknoten (A4) umfasst ist, wobei das Ortungssystem (2) ferner dazu eingerichtet ist, für den zumindest einen hinzugefügten Ankerknoten (A4) Abstandsmessungen zu den benachbarten verifizierten Ankerknoten (A1..A3) durchzuführen und eine dem hinzugefügten Ankerknoten (A4) zugewiesene Position als nicht plausibel zu klassifizieren, wenn der gemessene Abstandswert (dm) vom errechneten Abstandswert (dc) um mehr als den vorgegebenen Grenzwert abweicht.

4. Ortungssystem (2) nach einem der Ansprüche 1 bis 3, **dadurch gekennzeichnet, dass** das Ortungssystem (2) ferner dazu eingerichtet ist, die zumindest eine Abstandsmessung auf Anforderung oder in vorgebbaren regelmäßigen zeitlichen Intervallen durchzuführen.

5. Ortungssystem (2) nach einem der Ansprüche 1 bis 4, **dadurch gekennzeichnet, dass** die Mehrzahl von Ankerknoten (A1..A5) eine erste und eine zweite Gruppe von Ankernoten umfasst, wobei der ersten Gruppe von Ankerknoten (A1..A3) jeweils eine Position zugewiesen ist und der zweiten Gruppe von Ankerknoten (A4, A5) jeweils keine Position zugewiesen ist, wobei das Ortungssystem (2) ferner dazu eingerichtet ist, Abstände (d14, d24, d34) zwischen einem ersten Ankerknoten (A4) der zweiten Gruppe und zumindest drei unterschiedlichen zweiten Ankerknoten (A1..A3) der ersten Gruppe zu bestimmen, ausgehend von diesen Abständen (d14, d24, d34) eine Position des ersten Ankerknotens (A4) zu berechnen und dem ersten Ankerknoten (A4) die errechnete Position zuzuweisen.

6. Verfahren zum Betreiben eines Ortungssystems (2) in einer Warenlogistikeinrichtung, umfassend eine Mehrzahl von fest installierten Ankerknoten (A1..A5), die Referenzpunkte in einem gemeinsamen Koordinatensystem (6) darstellen, wobei ausgehend von einem ersten Ankerknoten (A1) ein Abstand (d14) zu zumindest einem zweiten Ankerknoten bestimmt (A4) wird, und wobei den fest installierten Ankerknoten (A1..A7) jeweils eine Position in dem Koordinatensystem (6) zugewiesen ist oder wird und das Verfahren die folgenden Schritte umfasst: Messen eines Abstands (dm) zwischen einem ersten Ankerknoten (A6) und einem zweiten Ankerknoten (A3), Errechnen eines Abstandswerts (dc) aus der zugewiesenen Position des ersten Ankerknotens (A6) und der zugewiesenen Position des zweiten Ankerknotens (A3) in dem Koordinatensystem (6), Vergleichen des gemessenen Abstandswerts (dm) mit dem errechneten Abstandswert (dc) und **gekennzeichnet durch** Klassifizieren der zugewiesenen Position des ersten und/oder des zweiten Ankerknotens (A6, A3) als nicht plausibel, wenn eine Abweichung zwischen dem gemessenen Abstandswert (dm) und dem errechneten Abstandswert (dc) größer als ein vorgegebener Grenzwert ist.

7. Verfahren nach Anspruch 6, **dadurch gekennzeichnet, dass** für eine Anzahl vorbestimmter Ankerknoten (A1..A7) jeweils ein Abstand zu den benachbarten Ankerknoten (A1..A7) gemessen und die Positionen eines Ankerknotens (A6) als nicht plausibel klassifiziert werden, wenn der gemessene Abstandswert (dm) vom errechneten Abstandswert (dc) und mehr als dem vorgegebenen Grenzwert abweicht und eine solche Abweichung für mehr als einen benachbarten Ankerknoten (A3, A5, A7) vorliegt.

8. Verfahren nach Anspruch 6 oder 7, **dadurch gekennzeichnet, dass** verifizierte Ankerknoten (A1..A3), deren Positionen als plausibel klassifiziert sind, und zumindest ein hinzugefügter Ankerknoten (A4) in dem Ortungssystem (2) umfasst sind, wobei der Abstand zumindest eines hinzugefügten Ankerknotens (A4) zu benachbarten verifizierten Ankerknoten (A1..A3) gemessen wird und eine dem hinzugefügten Ankerknoten (A4) zugewiesene Position als nicht plausibel klassifiziert wird, wenn der gemessene Abstandswert (dm) vom errechneten Abstandswert (dc) und mehr als dem vorgegebenen Grenzwert abweicht.

9. Verfahren nach einem der Ansprüche 6 bis 8, **dadurch gekennzeichnet, dass** die zumindest eine Abstandsmessung auf Anforderung oder in vorgebbaren regelmäßigen zeitlichen Intervallen durchgeführt wird.

10. Verfahren nach einem der Ansprüche 6 bis 9, **dadurch gekennzeichnet, dass** die Mehrzahl von Ankerknoten (A1..A5) eine erste und eine zweite Gruppe von Ankernoten umfasst, wobei der ersten Gruppe von Ankerknoten (A1..A3) jeweils eine Position zugewiesen wird oder ist und der zweiten Gruppe von Ankerknoten (A4, A5) jeweils keine Position zugewiesen wird oder ist, wobei das Verfahren die folgenden Schritte umfasst: Bestimmen von Abständen (d14, d24, d34) zwischen einem ersten Ankerknoten (A4) der zweiten Gruppe und zumindest drei unterschiedlichen zweiten Ankerknoten (A1..A3) der ersten Gruppe, Errechnen einer Position des ersten Ankerknotens (A4) ausgehend von diesen Abständen (d14, d24, d34) und Zuweisen der errechneten Position zu dem Ankerknoten (A4).

## Claims

1. A positioning system (2) for position determination in a goods logistics facility, comprising a plurality of permanently installed anchor nodes (A1..A5) that represent reference points in a common coordinate system (6), wherein the positioning system (2) is configured to determine a distance (d14) from a first anchor node (A1) to at least one second anchor node (A4), wherein the permanently installed anchor nodes (A1..A7) have each been assigned a position within the coordinate system (6) and the positioning system (2) is configured to measure the distance between a first anchor node (A6) and a second anchor node (A3) and to compare the measured distance value (dm) with a computed distance value (dc), the computed distance value (dc) being calculated from the assigned position of the first anchor node (A6) and the assigned position of the second anchor node (A3) within the coordinate system (6), **characterized in that** a deviation between the measured distance value (dm) and the computed distance value (dc) is defined as a plausibility criterion, and if the deviation exceeds a predetermined threshold value, the assigned position of the first and/or second anchor node (A6, A3) is classified as implausible.

2. The positioning system (2) according to claim 1, **characterized in that** the positioning system (2) is further configured to measure the distance between a number of predetermined anchor nodes (A1..A7) and the neighboring anchor nodes (A1..A7) in each case and to classify the position of an anchor node (A6) as implausible if the measured distance value (dm) deviates from the computed distance value (dc) by more than the predetermined threshold value and if such a deviation is present for more than one neighboring anchor node (A1..A7).

3. The positioning system (2) according to claim 1 or 2, **characterized in that** verified anchor nodes (A1..A3) whose positions are classified as plausible and at least one added anchor node (A4) are included, the positioning system (2) further being configured to measure the distance between the at least one added anchor node (A4) and the neighboring verified anchor nodes (A1..A3) and to classify a position assigned to the added anchor node (A4) as implausible if the measured distance value (dm) deviates from the computed distance value (dc) by more than the predetermined threshold value.

4. The positioning system (2) according to any one of claims 1 to 3, **characterized in that** the positioning system (2) is further configured to carry out the at least one distance measurement upon request or at regular predefinable time intervals.

5. The positioning system (2) according to any one of claims 1 to 4, **characterized in that** the plurality of anchor nodes (A1..A5) comprises a first and a second group of anchor nodes, the first group of anchor nodes (A1..A3) having been assigned one position in each case and the second group of anchor nodes (A4, A5) having been assigned no position in each case, the positioning system (2) further being configured to determine distances (d14, d24, d34) between a first anchor node (A4) of the second group and at least three different second anchor nodes (A1..A3) of the first group, to calculate a position of the first anchor node (A4) based on these distances (d14, d24, d34), and to assign the computed position to the first anchor node (A4).

6. A method for operating a positioning system (2) in a goods logistics facility, comprising a plurality of permanently installed anchor nodes (A1..A5) that represent reference points in a common coordinate system (6), wherein a distance (d14) from a first anchor node (A1) to at least one second anchor node (A4) is determined and wherein a position within the coordinate system (6) has been or is assigned to each of the permanently installed anchor nodes (A1..A7) and the method comprises the following steps: measuring a distance (dm) between a first anchor node (A6) and a second anchor node (A3), computing a distance value (dc) from the assigned position of the first anchor node (A6) and the assigned position of the second anchor node (A3) within the coordinate system (6), comparing the measured distance value (dm) with the computed distance value (dc), and **characterized by** classifying the assigned position of the first and/or second anchor node (A6, A3) as implausible if a deviation between the measured distance value (dm) and the computed distance value (dc) is greater than a predetermined threshold value.

7. The method according to claim 6, **characterized in that** a distance between a number of predetermined anchor nodes (A1..A7) and the neighboring anchor nodes (A1..A7) is measured in each case and the positions of an anchor node (A6) are classified as implausible if the measured distance value (dm) deviates from the computed distance value (dc) by more than the predetermined threshold value and if such a deviation is present for more than one neighboring anchor node (A3, A5, A7).

8. The method according to claim 6 or 7, **characterized in that** verified anchor nodes (A1..A3) whose positions are classified as plausible and at least one added anchor node (A4) are included in the positioning system (2), the distance between at least one added anchor node (A4) and neighboring verified anchor nodes (A1..A3) being measured and a position assigned to the added anchor node (A4) being classified as implausible if the measured distance value (dm) deviates from the computed distance value (dc) by more than the predetermined threshold value.

9. The method according to any one of claims 6 to 8, **characterized in that** the at least one distance measurement is carried out upon request or at regular predefinable time intervals.

10. The method according to any one of claims 6 to 9, **characterized in that** the plurality of anchor nodes (A1..A5) comprises a first and a second group of anchor nodes, the first group of anchor nodes (A1..A3) being assigned or having been assigned a position in each case and the second group of anchor nodes (A4, A5) being assigned or having been assigned no position in each case, the method comprising the following steps: determining distances (d14, d24, d34) between a first anchor node (A4) of the second group and at least three different second anchor nodes (A1..A3) of the first group, computing a position of the first anchor node (A4) based on these distances (d14, d24, d34), and assigning the computed position to the anchor node (A4).

## Revendications

1. Système de localisation (2) permettant la détermination d'une position dans une installation de logistique des marchandises, comprenant une pluralité de nœuds d'ancrage (A1..A5) installés de manière fixe, qui représentent des points de référence dans un système de coordonnées (6) commun, le système de localisation (2) étant conçu pour déterminer une distance (d14) entre un premier nœud d'ancrage (A1) et au moins un deuxième nœud d'ancrage (A4), une position dans le système de coordonnées (6) étant attribuée à chaque nœuds d'ancrage (A1..A5) installés de manière fixe, et le système de localisation (2) étant conçu pour mesurer une distance entre un premier nœud d'ancrage (A6) et un deuxième nœud d'ancrage (A3) et pour comparer la valeur de distance mesurée (dm) avec une valeur de distance calculée (dc), la valeur de distance calculée (dc) est calculée à partir de la position assignée du premier nœud d'ancrage (A6) et de la position assignée du deuxième nœud d'ancrage (A3) dans le système de coordonnées (6) **caractérisé en ce qu'**un écart entre la valeur de distance mesurée (dm) et la valeur de distance calculée (dc) est défini comme critère de plausibilité, et si l'écart dépasse une valeur limite prédéterminée, la position assignée du premier et/ou du deuxième nœud d'ancrage (A6, A3) est classée comme étant non plausible.

2. Système de localisation (2) selon la revendication 1, **caractérisé en ce que** le système de localisation (2) est en outre configuré pour effectuer, pour un certain nombre de nœuds d'ancrage prédéterminés (A1..A7), des mesures de distance respectives par rapport aux nœuds d'ancrage voisins (A1..A7) et pour classer la position d'un nœud d'ancrage (A6) comme non plausible si la valeur de distance mesurée (dm) s'écarte de la valeur de distance calculée (dc) de plus de la valeur limite prédéterminée et si un tel écart est présent pour plus d'un nœud d'ancrage voisin (A1..A7).

3. Système de localisation (2) selon la revendication 1 ou la revendication 2, **caractérisé en ce qu'**il comprend des nœuds d'ancrage vérifiés (A1..A3) dont les positions sont classées comme plausibles et au moins un nœud d'ancrage ajouté (A4), le système de localisation (2) étant en outre configuré pour effectuer, pour ledit au moins un nœud d'ancrage ajouté (A4), des mesures de distance par rapport aux nœuds d'ancrage vérifiés voisins (A1..A3) et pour classer une position attribuée au nœud d'ancrage ajouté (A4) comme étant non plausible si la valeur de distance mesurée (dm) s'écarte de la valeur de distance calculée (dc) de plus de la valeur limite prédéterminée.

4. Système de localisation (2) selon l'une quelconque des revendications 1 à 3, **caractérisé en ce que** le système de localisation (2) est en outre configuré pour effectuer au moins une mesure de distance sur demande ou à des intervalles de temps réguliers prédéterminables.

5. Système de localisation (2) selon l'une quelconque des revendications 1 à 4, **caractérisé en ce que** la pluralité de nœuds d'ancrage (A1..A5) comprend un premier et un deuxième groupe de nœuds d'ancrage, une position étant attribuée à chaque nœud d'ancrage du premier groupe de nœuds d'ancrage (A1..A3) et aucune position n'étant attribuée au deuxième groupe de nœuds d'ancrage (A4, A5), le système de localisation (2) étant en outre conçu pour déterminer des distances (d14, d24, d34) entre un premier nœud d'ancrage (A4) du deuxième groupe et au moins trois deuxièmes nœuds d'ancrage différents (A1 ..A3) du premier groupe, afin de calculer une position du premier nœud d'ancrage (A4) sur la base de ces distances (d14, d24, d34) et pour attribuer la position calculée au premier nœud d'ancrage (A4).

6. Procédé d'exploitation d'un système de localisation (2) dans une installation de logistique des marchandises, comprenant une pluralité de nœuds d'ancrage (A1..A5) installés de manière fixe, qui représentent des points de référence dans un système de coordonnées (6) commun, dans lequel, à partir d'un premier nœud d'ancrage (A1), on détermine une distance (d14) par rapport à au moins un deuxième nœud d'ancrage (A4), et dans lequel on attribue à chacun des nœuds d'ancrage (A1..A7) installés de manière fixe une position respective dans le système de coordonnées (6), le procédé comprenant les étapes suivantes : Mesure d'une distance (dm) entre un premier nœud d'ancrage (A6) et un deuxième nœud d'ancrage (A3), Calcul d'une valeur de distance (dc) à partir de la position assignée du premier nœud d'ancrage (A6) et de la position assignée du deuxième nœud d'ancrage (AS) dans le système de coordonnées (6), Comparaison de la valeur de distance mesurée (dm) avec la valeur de distance calculée (dc), et étant **caractérisé par** le fait de classer la position assignée du premier et/ou du deuxième nœud d'ancrage (A6, A3) comme étant non plausible si un écart entre la valeur de distance mesurée (dm) et la valeur de distance calculée (dc) est supérieur à une valeur limite prédéterminée.

7. Procédé selon la revendication 6, **caractérisé en ce que**, pour un certain nombre de nœuds d'ancrage (A1..A7) prédéterminés, on mesure à chaque fois une distance par rapport aux nœuds d'ancrage (A1..A7) voisins et on classe les positions d'un nœud d'ancrage (A6) comme non plausibles si la valeur de distance mesurée (dm) s'écarte de la valeur de distance calculée (dc) et est supérieure à la valeur limite prédéterminée et si un tel écart existe pour plus d'un nœud d'ancrage (A3, A5, A7) voisin.

8. Procédé selon la revendication 6 ou la revendication 7, **caractérisé en ce que** des nœuds d'ancrage vérifiés (A1..A3) dont les positions sont classées comme plausibles et au moins un nœud d'ancrage ajouté (A4) sont inclus dans le système de localisation (2), la distance allant d'au moins un nœud d'ancrage ajouté (A4) à des nœuds d'ancrage vérifiés voisins (A1 ..A3) est mesurée et une position attribuée au nœud d'ancrage ajouté (A4) est classée comme non plausible si la valeur de distance mesurée (dm) s'écarte de la valeur de distance calculée (dc) et est supérieure à la valeur limite prédéterminée.

9. Procédé selon l'une quelconque des revendications 6 à 8, **caractérisée en ce que** la mesure de distance, au nombre d'au moins une, est effectuée sur demande ou à des intervalles de temps réguliers prédéterminables.

10. Procédé selon l'une quelconque des revendications 6 à 9, **caractérisé en ce que** la pluralité de nœuds d'ancrage (A1 ..A5) comprend un premier et un deuxième groupe de nœuds d'ancrage, une position étant attribuée ou apte à être attribuée à chaque nœud d'ancrage du premier groupe de nœuds d'ancrage (A1 ..A3), et aucune position n'étant attribuée ou apte à être attribuée au deuxième groupe de nœuds d'ancrage (A4, A5), le procédé comprenant les étapes suivantes : Déterminer les distances (d14, d24, d34) entre un premier nœud d'ancrage (A4) du deuxième groupe et au moins trois deuxièmes nœuds d'ancrage différents (A1 ..A3) du premier groupe, Calculer une position du premier nœud d'ancrage (A4) sur la base de ces distances (d14, d24, d34), et Attribuer la position calculée au nœud d'ancrage (A4).
